(19) Europäisches Patentamt
European Patent Office
Office européen des brevets

(11) EP 3 126 432 B1

(12) # EUROPÄISCHE PATENTSCHRIFT

(45) Veröffentlichungstag und Bekanntmachung des Hinweises auf die Patenterteilung:
**10.01.2018 Patentblatt 2018/02**

(21) Anmeldenummer: **15712615.2**

(22) Anmeldetag: **26.03.2015**

(51) Int Cl.:
***C08J 5/00*** (2006.01) ***C08J 5/02*** (2006.01)
***C08J 5/04*** (2006.01) ***C08J 5/10*** (2006.01)
***C08F 220/18*** (2006.01) ***C08L 33/08*** (2006.01)

(86) Internationale Anmeldenummer:
**PCT/EP2015/056542**

(87) Internationale Veröffentlichungsnummer:
**WO 2015/150213 (08.10.2015 Gazette 2015/40)**

(54) **VERFAHREN ZUR HERSTELLUNG VON FORMKÖRPERN**

METHOD FOR PRODUCING MOULDED BODIES

PROCÉDÉ DE FABRICATION D'ÉLÉMENTS DE MOULAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2014 EP 14163584**

(43) Veröffentlichungstag der Anmeldung:
**08.02.2017 Patentblatt 2017/06**

(73) Patentinhaber: **BASF SE**
**67056 Ludwigshafen am Rhein (DE)**

(72) Erfinder:
- **JIMENEZ GARCIA, Lucia**
  **68199 Mannheim (DE)**
- **MICHL, Kathrin**
  **67063 Ludwigshafen (DE)**
- **HENNIG, Ingolf**
  **68809 Neulußheim (DE)**
- **CHA, Kitty Chih-Pei**
  **67063 Ludwigshafen (DE)**
- **SCHWAB, Matthias Georg**
  **68199 Mannheim (DE)**

(74) Vertreter: **BASF IP Association**
**BASF SE**
**G-FLP-C006**
**67056 Ludwigshafen (DE)**

(56) Entgegenhaltungen:
**EP-A1- 0 583 086** **EP-A1- 2 216 358**
**EP-A2- 0 445 578**

EP 3 126 432 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gegenstand der vorliegenden Erfindung ist ein Verfahren zur Herstellung eines Formkörpers aus körnigen und/oder faserförmigen Substraten, welches dadurch gekennzeichnet ist, dass eine wässrige Dispersion PG, hergestellt aus

a) einer wässrigen Polymerisatdispersion, deren Dispersionspolymerisat eine Glasübergangstemperatur Tg aufweist, und

b) einer wässrigen Graphen-Dispersion,

wobei der Gewichtsanteil an Graphen $\geq$ 0,01 und $\leq$ 20 Gew.-Teile pro 100 Gewichtsteilen Dispersionspolymerisat (fest/fest) beträgt, auf das körnige und/oder faserförmige Substrat aufgebracht wird, gegebenenfalls das mit der wässrigen Dispersion PG behandelte körnige und/oder faserförmige Substrat in Form gebracht wird und anschließend das so behandelte körnige und/oder faserförmige Substrat bei einer Temperatur T > Tg einem Trocknungsschritt unterzogen wird.

Verfahren zur Herstellung eines Formkörpers aus körnigen und/oder faserförmigen Substraten, insbesondere Faservliese sind dem Fachmann geläufig. Dabei erfolgt die Herstellung der Formkörper in der Regel dergestalt, dass ein wässriges Bindemittelsystem auf die körnigen und/oder förmigen Substrate aufgebracht oder in die Faservliese eingebracht wird, danach das so behandelte körnige und/oder faserförmige Substrat bzw. Faservlies gegebenenfalls in Form gebracht wird und anschließend das so erhaltene körnige und/oder faserförmige Substrat bzw. Faservlies einem thermischen Behandlungsschritt unterzogen wird.

In der Vergangenheit wurden aus Kostengründen vielfach Bindemittel eingesetzt, welche Formaldehyd abspaltenden Vernetzer enthalten. Neuere Bindemittelsysteme spalten weder bei der Verarbeitung noch bei der Verwendung der erhaltenen Formkörper Formaldehyd ab.

So sind aus der US-A 4,076,917 Bindemittel bekannt, welche Carbonsäure- oder Carbonsäureanhydrid-haltige Polymerisate und $\beta$-Hydroxyalkylamide als Vernetzer enthalten. Nachteilig ist die relativ aufwendige Herstellung der $\beta$-Hydroxyalkylamide.

Aus der EP-A-445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein reaktives Polyol eingesetzt wird. Als hochreaktive Polyole werden $\beta$-Hydroxyalkylamide genannt.

Die EP-A-651088 beschreibt entsprechende Bindemittel für Substrate aus Cellulosefaser. Diese Bindemittel enthalten zwingend einen phosphorhaltigen Reaktionsbeschleuniger.

Die EP-A-672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein $\beta$-Hydroxyalkylamid oder ein Polymer oder Copolymer davon. Das mit dem $\beta$-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der $\beta$-Hydroxyalkylamide mit Carboxylgruppen enthaltenden Monomeren.

In der US-A 2004/82689 werden formaldehydfreie wässrige Bindemittel zur Herstellung von Faservliesen, insbesondere Glasfaservliesen, offenbart, welche essentiell aus einer polymeren Polycarbonsäure, einem Polyol und einem Imidazolin-Derivat bestehen. Die erhaltenen gebundenen Faservliese sollen eine reduzierte Wasseraufnahme aufweisen. Es werden unspezifisch sowohl stickstoffhaltige als auch stickstofffreie Polyole offenbart, wobei jedoch insbesondere das stickstoffhaltige Triethanolamin als bevorzugt beschrieben wird. Als spezifische Imidazolin-Derivate werden Umsetzungsprodukte aus einer Fettsäure mit Aminoethylethanolamin oder Diethylentriamin genannt. Die offenbarten wässrigen Bindemittelzusammensetzungen enthalten einen phosphorhaltigen Reaktionsbeschleuniger.

Gemäß der WO 99/09100 sind thermisch härtbare Zusammensetzungen und deren Verwendung als formaldehydfreie Bindemittel zur Herstellung von Formkörpern offenbart, welche neben einem Alkanolamin mit wenigstens zwei OH-Gruppen, ein Polymerisat 1, welches $\leq$ 5 Gew.-% und ein weiteres Polymerisat 2, welches $\leq$ 15 Gew.-% einer $\alpha,\beta$-ethylenisch ungesättigten Mono- oder Dicarbonsäure in einpolymerisierter Form enthält.

Des Weiteren offenbart die WO10/34645 wässrige Bindemittelsysteme für körnige und/oder faserförmige Substrate, welche als wirksame Bestandteile ein Polymerisat 1, enthaltend $\geq$ 5,5 Gew.-% und $\leq$ 20 Gew.-% einer $\alpha,\beta$-ethylenisch ungesättigten Mono- oder Dicarbonsäure in einpolymerisierter Form, ein Polymerisat 2, enthaltend $\geq$ 40 Gew.-% einer $\alpha,\beta$-ethylenisch ungesättigten Mono- oder Dicarbonsäure in einpolymerisierter Form und eine Polyolverbindung mit wenigstens zwei Hydroxylgruppen.

In der EP-A 1005508 werden wässrige Bindemittel für körnige und/oder faserförmige Substrate offenbart, welche wenigstens aus einem Dispersionspolymerisat, welches weniger als 5 Gew.-% an Säuremonomeren in einpolymerisierter Form enthält, einem Säurepolymerisat, welches mehr als 40 Gew.-% an Säuremonomeren in einpolymerisierter Form enthält und einem Alkanolamin mit wenigstens zwei Hydroxygruppen, besteht.

Die EP-A 1240205 offenbart wässrige Bindemittel für körnige und/oder faserförmige Substrate, umfassend Dispersionspolymerisate, welche in Anwesenheit eines spezifischen Säurepolymeren durch radikalisch initiierte wässrige Emulsionspolymerisation erhalten wurden.

Gemäß der EP-A 1448733 werden thermisch härtbare wässrige Bindemittelsysteme beschrieben, welche ein Emulsionspolymerisat, ein Säurepolymer, eine mono- oder multifunktionelle Epoxidverbindung sowie zusätzlich ein Polyol oder ein Alkanolamin mit wenigstens zwei Hydroxygruppen enthalten.

Die EP-A 2328972 offenbart wässrige Bindemittel für körnige und/oder faserförmige Substrate, umfassend als wesentliche Bestandteile ein Dispersionspolymerisat, enthaltend in einpolymerisierter Form 5,5 bis 20 Gew.-% eines Carbonsäuremonomers, ein Säurepolymer und eine Polyolverbindung mit wenigstens zwei Hydroxygruppen.

In der WO 2011/29810 werden Dispersionspolymerisate als Bindemittel für körnige und/oder faserförmige Substrate beschrieben, welche zwingend Acrylamid und/oder Methacrylamid, wenigstens eine ethylenisch ungesättigte Mono- oder Dicarbonsäure und wenigstens ein Oxiranyl- oder Oxetanylgruppen-haltiges Monomer in einpolymerisierter Form enthalten.

Gemäß der WO 2012/117017 werden Bindemittel für körnige und/oder faserförmige Substrate beschrieben, welche neben einer Saccharidverbindung noch ein spezifisch aufgebautes Dispersionspolymerisat mit einer Glasübergangstemperatur im Bereich vorn $\geq$ 5 und $\leq$ 35 °C aufweisen.

In der WO 2010/86176 wird ein Verfahren zur Herstellung elektrisch leitfähiger Formkörper offenbart, gemäß welchem Graphitoxid mit Hilfe eines Dispergierhilfsmittels in einem wässrigen Medium dispergiert und anschließend durch Reduktion in eine wässrige Graphen-Dispersion überführt wird, diese wässrige Graphen-Dispersion mit einer wässrigen Polymerisatdispersion gemischt wird und aus diesem Gemisch das Wasser entfernt wird, dann das verbleibende Graphen/Polymergemisch bis zur Verflüssigung des Dispersionspolymers erhitzt und die erhaltene flüssige Masse in die gewünschte Form gebracht und daran anschließend abgekühlt wird. Die Verwendung eines Graphen/Dispersionspolymerisat-Gemisches als Bindemittel für körnige und/oder faserförmige Substrate wird weder offenbart noch nahe gelegt.

In analoger Weise wird in der WO 2011/144321 ein Verfahren zur Herstellung elektrisch leitfähiger Formkörper offenbart, gemäß welchem eine wässrige Graphen-Dispersion mit einer wässrigen Polymerisatdispersion gemischt und aus diesem Gemisch das Wasser entfernt wird, dann das verbleibende Graphen/Polymergemisch bis zur Verflüssigung des Dispersionspolymers erhitzt und die erhaltene flüssige Masse in die gewünschte Form gebracht und daran anschließend abgekühlt wird. Die Verwendung eines Graphen/Dispersionspolymerisat-Gemisches als Bindemittel für körnige und/oder faserförmige Substrate wird weder offenbart noch nahe gelegt.

Nachteilig an den bekannten Verfahren zur Herstellung von Formkörpern aus körnigen und/oder faserförmigen Substraten ist, dass die unter Verwendung bekannter Bindemittel erhaltenen Formkörper keinerlei oder lediglich eine äußerst geringe elektrische Leitfähigkeit aufweisen. Eine elektrische Leitfähigkeit der Formkörper ist jedoch bei deren Herstellung, deren Verarbeitung bzw. deren Endanwendung vielfach von Vorteil, wie beispielsweise in antistatischen Fußbodenbelägen.

Aufgabe der vorliegenden Erfindung war es daher, ein Verfahren zur Herstellung von Formkörpern aus körnigen und/oder faserförmigen Substraten zur Verfügung zu stellen, welches unter Verwendung eines spezifischen Bindemittelsystems elektrisch leitfähige Formkörper zugänglich macht.

Demgemäß wurde das eingangs definierte Verfahren gefunden.

Eine wesentliche Komponente der im erfindungsgemäßen Verfahren eingesetzten wässrigen Dispersion PG ist eine wässrige Polymerisatdispersion, deren Dispersionspolymerisat eine Glasübergangstemperatur Tg aufweist.

Dabei wird unter einer wässrigen Polymerisatdispersion ein fluides System verstanden, welches als disperse Phase in wässrigem Medium ein aus mehreren ineinander verschlungenen Polymerisatketten bestehenden Polymerisatknäuel, die sogenannte Polymermatrix und/oder aus vernetzten Polymerisatstrukturen aufgebaute Polymerpartikel (Dispersionspolymerisat) in disperser Verteilung befindlich enthalten. Die mittleren Durchmesser der Dispersionspolymerisatpartikel liegt in der Regel im Bereich von 10 bis 2000 nm.

Als Dispersionspolymerisate kommen im Rahmen der vorliegenden Erfindung alle natürlich vorkommenden und/oder synthetisch hergestellten Polymerisate in Betracht, welche eine Glasübergangstemperatur Tg aufweisen. Beispielhaft für Dispersionspolymerisate auf Basis von Naturstoffen seien Nitrocellulose, Celluloseester, Kolophonium und/oder Schellack genannt. Bei den synthetisch hergestellten Dispersionspolymeriate seien beispielhaft Polykondensationsprodukte, wie beispielsweise Alkydharze, Polyester, Polyamide, Silikonharze und/oder Epoxyharze sowie Polyadditionsprodukte, wie beispielsweise Polyurethane genannt. Bei den Polyadditionsprodukten handelt es sich jedoch bevorzugt um Polymerisate, welche aus ethylenisch ungesättigten Verbindungen in einpolymerisierter Form aufgebaut sind. Die Herstellung dieser Polyadditionsverbindungen erfolgt in der Regel durch dem Fachmann geläufige metallkomplexkatalysierte, anionisch katatysierte, kationisch katalysierte und besonders bevorzugt durch radikalisch katalysierte Polymerisation ethylenisch ungesättigter Verbindungen.

Die radikalisch katalysierte Polymerisation von ethylenisch ungesättigten Verbindungen ist dem Fachmann geläufig und erfolgt insbesondere nach der Methode der radikalischen Substanz-, Emulsions-, Lösungs-, Fällungs- oder Suspensionspolymerisation, wobei jedoch die radikalisch initiierte wässrige Emulsionspolymerisation insbesondere bevorzugt ist.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich die Herstellung einer erfindungsgemäß eingesetzten wässrigen Polymerisatdispersion lediglich dadurch, dass die Monomeren in Art und Menge so gewählt werden, dass die gebildeten Dispersionspolymerisate eine Glasübergangstemperatur Tg aufweisen. Dabei ist es selbstverständlich, dass zur Herstellung der Dispersionspolymerisate im Rahmen der vorliegenden Schrift auch die dem Fachmann geläufigen Saat-, Stufen- und Gradientenfahrweisen mit umfasst sein sollen.

Als Monomere kommen insbesondere in einfacher Weise radikalisch polymerisierbare Monomere in Betracht, wie beispielsweise Ethylen, vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, - iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien und Isopren. Die genannten Monomere bilden in der Regel die Hauptmonomeren, die, bezogen auf die zur Herstellung des Dispersionspolymerisats eingesetzte Menge aller ethylenisch ungesättigter Verbindungen (Gesamtmonomerenmenge), einen Anteil $\geq$ 50 Gew.-%, bevorzugt $\geq$ 80 Gew.-% und insbesondere bevorzugt $\geq$ 90 Gew.-% auf sich vereinen. In aller Regel weisen diese Monomeren in Wasser bei Normalbedingungen [20 °C, 1 atm (= 1,013 bar absolut)] lediglich eine mäßige bis geringe Löslichkeit auf.

Monomere, die unter den vorgenannten Bedingungen eine erhöhte Wasserlöslichkeit aufweisen, sind solche,

die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)-ethylmethacrylat, N-(3-N',N'-Dimethylaminopropyl)methacrylamid und 2-(1-Imidazolin-2-onyl)-ethylmethacrylat. Im Normalfall sind die vorgenannten Monomeren lediglich als modifizierende Monomere in Mengen ≤ 10 Gew.-% und bevorzugt ≤ 5 Gew.-%, bezogen auf die Gesamtmonomerenmenge, enthalten.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen ≤ 5 Gew.-%, bevorzugt jedoch in Mengen ≤ 3 Gew.-%, jeweils bezogen auf die Gesamtmonomerenmenge, eingesetzt.

Erfindungsgemäß vorteilhaft werden wässrige Polymerisatdispersionen eingesetzt, deren Dispersionspolymerisate

| | |
|---|---|
| ≥ 50 und ≤ 99,9 Gew.-% | Ester der Acryl- und/oder Methacrylsäure mit 1 bis 12 C-Atome aufweisenden Alkanolen und/oder Styrol, |
| oder | |
| ≥ 40 und ≤ 99,9 Gew.-% | Styrol und/oder Butadien, |
| oder | |
| ≥ 50 und ≤ 99,9 Gew.-% | Vinylchlorid und/oder Vinylidenchlorid, |
| oder | |
| ≥ 40 und ≤ 99,9 Gew.-% | Vinylacetat, Vinylpropionat und/oder Ethylen |

in einpolymerisierter Form enthalten.

Insbesondere vorteilhaft werden erfindungsgemäß solche wässrige Polymerisatdispersionen eingesetzt, deren Dispersionspolymerisate

| | |
|---|---|
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 50 und ≤ 99,9 Gew.-% | wenigstens eines Esters der Acryl- und/oder Methacrylsäure mit 1 bis 12 C-Atome aufweisenden Alkanolen und/oder Styrol, |
| oder | |
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 40 und ≤ 99,9 Gew.-% | Styrol und/oder Butadien, |

oder

| | |
|---|---|
| $\geq$ 0,1 und $\leq$ 5 Gew.-% | wenigstens eine 3 bis 6 C-Atome aufweisende $\alpha,\beta$-monoethylenisch ungesättigte Mono- und/oder Dicarbonsäure und/oder deren Amid, und |
| $\geq$ 50 und $\leq$ 99,9 Gew.-% | Vinylchlorid und/oder Vinylidenchlorid, |

oder

| | |
|---|---|
| $\geq$ 0,1 und $\leq$ 5 Gew.-% | wenigstens eine 3 bis 6 C-Atome aufweisende $\alpha,\beta$-monoethylenisch ungesättigte Mono- und/oder Dicarbonsäure und/oder deren Amid, und |
| $\geq$ 40 und $\leq$ 99,9 Gew.-% | Vinylacetat, Vinylpropionat und/oder Ethylen |

in einpolymerisierter Form enthalten.

Die radikalisch initiierte wässrige Emulsionspolymerisation zur Herstellung der Dispersionspolymerisate wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(11)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Üblicherweise werden bei der Herstellung der Dispersionspolymerisate durch radikalisch initiierten wässrigen Emulsionspolymerisation Dispergierhilfsmittel mitverwendet, die sowohl die Monomerentröpfchen als auch Polymerisatteilchen in der wässrigen Phase dispers verteilt halten und so die Stabilität der erzeugten wässrigen Dispersionen der Dispersionspolymerisate gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: C4 bis C12), ethoxilierte Fettalkohole (EO-Grad: 3 bis 50; Alkylrest: C8 bis C36) sowie Alkalimetall- und Ammoniumsalze von Alkylsulfaten (Alkylrest: C8 bis C12), von Schwefelsäurehalbestern ethoxylierter Alkanole (EO-Grad: 4 bis 30, Alkylrest: C12 bis C18) und ethoxilierter Alkylphenole (EO-Grad: 3 bis 50, Alkylrest: C4 bis C12), von Alkylsulfonsäuren (Alkylrest: C12 bis C18) und von Alkylarylsulfonsäuren (Alkylrest: C9 bis C18). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

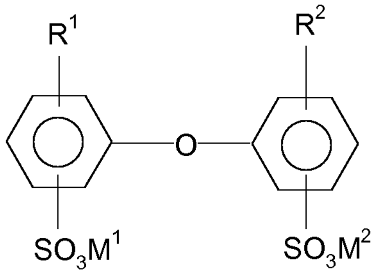

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Vorteilhaft werden bei der Herstellung der Dispersionspolymerisate durch radikalisch initiierten wässrigen Emulsionspolymerisation nichtionische und/oder anionische Dispergierhilfsmittel verwendet. Es können jedoch auch kationische Dispergierhilfsmittel eingesetzt werden.

In der Regel beträgt die Menge an eingesetztem Dispergierhilfsmittel 0,1 bis 5 Gew.-%, bevorzugt 1 bis 3 Gew.-%, jeweils bezogen auf die Gesamtmonomerenmenge. Häufig ist es günstig, wenn eine Teil- oder die Gesamtmenge des Dispergierhilfsmittels dem wässrigen Reaktionsmedium vor der Initiierung der radikalischen Polymerisation zugeführt wird. Darüber hinaus kann eine Teil- oder die Gesamtmenge des Dispergierhilfsmittels dem wässrigen Reaktionsmedium vorteilhaft auch gemeinsam mit den Monomeren, insbesondere in Form einer wässrigen Monomerenemulsion während der Polymerisation zugeführt werden.

Radikalkettenübertragende Verbindungen werden üblicherweise eingesetzt, um das Molekulargewicht der durch eine radikalisch initiierte wässrige Emulsionspolymerisation zugänglichen Polymerisate A zu reduzieren bzw. zu kontrollieren. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die bei der Herstellung der Dispersionspolymerisate durch radikalisch initiierten wässrigen Emulsionspolymerisation optional eingesetzte Gesamtmenge der radikalkettenübertragenden Verbindungen, beträgt in der Regel < 5 Gew.-%, oft < 3 Gew.-% und häufig < 1 Gew.-%, jeweils bezogen auf die Gesamtmonomerenmenge.

Neben der saatfreien Herstellungsweise kann zur Einstellung der Polymerisatteilchengröße die Emulsionspolymerisation zur Herstellung der Dispersionspolymerisate nach dem Saatlatex-Verfahren oder in Gegenwart eines in situ hergestellten Saatlatex erfolgen. Verfahren hierzu sind dem Fachmann bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim semikontinuierlichen Zulaufverfahren eine definierte feinteilige Saat-Polymerisatdispersion im Polymerisationsgefäß vorzulegen und dann die Monomeren in Gegenwart des Saatlatices zu polymerisieren. Hierbei wirken die Saat-Polymerisatteilchen als 'Polymerisationskeime' und entkoppeln die Polymersatteilchenbildung und das Polymerisatteilchenwachstum. Während der Emulsionspolymerisation kann weitere Saatlatex direkt in den Polymerisationsreaktor zugegeben werden. Hierdurch werden breite Größenverteilungen der Polymerisatteilchen erreicht, die insbesondere bei Polymerisatdispersionen mit hohem Feststoffgehalt oftmals erwünscht sind (vgl. hierzu beispielsweise DE-A 4213965). Anstelle der Zugabe eines definierten Saatlatices kann dieser auch in situ erzeugt werden. Hierzu wird beispielsweise eine Teilmenge der zur Polymerisation eingesetzten Monomeren und des Radikalinitiators zusammen mit einer Teil- oder der Gesamtmenge des Emulgators vorgelegt und auf Reaktionstemperatur erwärmt, wobei eine relativ feinteilige Polymersaat entsteht. Anschließend wird im gleichen Polymerisationsgefäß die eigentliche Polymerisation nach dem Zulaufverfahren durchgeführt (siehe auch DE-A 4213965).

Vorteilhaft erfolgt Herstellung der Dispersionspolymerisate durch radikalisch initiierten wässrigen Emulsionspolymerisation bei einer Reaktionstemperatur im Bereich von 0 bis 170 °C, wobei jedoch Temperaturen von 70 bis 120 °C und insbesondere 80 bis 100 °C besonders bevorzugt sind. Die radikalische wässrige Emulsionspolymerisation kann bei einem Druck kleiner, gleich oder größer 1 atm (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar (Überdruck) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm (= Atmosphärendruck) unter Inertgasatmosphäre, wie beispielsweise unter Stickstoff oder Argon durchgeführt.

Bei der radikalisch initiierten wässrigen Emulsionspolymerisation kann das wässrige Reaktionsmedium prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt erfolgt die radikalisch initiierte wässrige Emulsionspolymerisation jedoch in Abwesenheit solcher Lösungsmittel durchgeführt.

Die erfindungsgemäß eingesetzten Dispersionspolymerisate können prinzipiell Glasübergangstemperaturen Tg im Bereich von ≥ -10 und ≤ 100 °C aufweisen. Mit Vorteil weisen die Dispersionspolymerisate eine Glasübergangstemperatur Tg im Bereich von ≥ 10 und ≤ 80 °C und vorteilhaft im Bereich ≥ 15 und ≤ 60 °C auf. Unter Glasübergangstemperatur Tg wird im Rahmen dieser Schrift die midpoint temperature nach ASTM D 3418-12 verstanden, ermittelt durch Differentialthermoanalyse (DSC; 20 K/min) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Von Bedeutung ist ferner, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten in guter Näherung nach folgender Gleichung abgeschätzt werden kann

$$1/Tg = x_1/Tg_1 + x_2/Tg_2 + .... x_n/Tg_n,$$

wobei $x_1$ $x_2$, .... $x_n$ die Massenbrüche der Monomeren 1, 2, .... n und $Tg_1$, $Tg_2$, .... $Tg_n$ die Glasübergangstemperaturen der jeweils nur aus einem der Monomeren 1, 2, .... n aufgebauten Homopolymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Die durch Emulsionspolymerisation zugänglichen wässrigen Dispersionspolymerisate in Form ihrer wässrigen Dispersionen weisen üblicherweise einen Polymerisatfeststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf.

Mit besonderem Vorteil liegen die Dispersionspolymerisate in Form von Teilchen mit einem mittleren Teilchendurchmesser ≥ 10 und ≤ 1000 nm, vorteilhaft ≥ 30 und ≤ 600 nm und besonders vorteilhaft ≥ 50 bis ≤ 400 nm, bestimmt nach der Methode der quasielastische Lichtstreuung (ISO-Norm 13 321; cumulant z-average), vor.

Selbstverständlich lassen sich wässrige Dispersionen des Dispersionspolymerisats prinzipiell auch in Form sogenannter sekundärer Polymerisatdispersionen herstellen (zur prinzipiellen Herstellung von sekundären Polymerisatdispersionensiehe beispielsweise Eckersley et al., Am. Chem. Soc., Div. Polymer Chemistry, 1977, 38(2), Seiten 630, 631, US-A 3360599, US-A 3238173, US-A 3726824, US-A 3734686 oder US-A 6207756). Die Herstellung der sekundären wässrigen Dispersionen erfolgt dabei in der Regel dergestalt, dass die nach der Methode der Substanz- oder Lösungspolymerisation hergestellten Dispersionspolymerisate in einem geeigneten organischen Lösemittel aufgelöst und unter Ausbildung von wässrigen Polymeren/Lösemittel-(Mini)emulsionen in ein wässriges Medium dispergiert werden. Anschließende Lösemittelabtrennung liefert die entsprechenden wässrigen Dispersionen des Dispersionspolymerisats.

Dementsprechend erfolgt das erfindungsgemäße Verfahren vorteilhaft mit wässrigen Polymerisatdispersionen, deren Dispersionspolymerisate einen mittleren Teilchendurchmesser ≥ 10 und ≤ 1000 nm, vorteilhaft ≥ 30 und ≤ 600 nm und besonders vorteilhaft ≥ 50 bis ≤ 400 nm aufweisen.

Mit besonderem Vorteil wird im erfindungsgemäßen Verfahren eine wässrige Polymerisatdispersion eingesetzt, deren Polymerisat aus

| | |
|---|---|
| ≥ 10,0 und ≤ 20,0 Gew.-% | n-Butylacrylat |
| ≥ 0 und ≤ 5,0 Gew.-% | N-Metylolacrylamid |
| ≥ 45,0 und ≤ 60,0 Gew.-% | Ethylacrylat |
| ≥ 0 und ≤ 5,0 Gew.-% | Acrylamid und/oder Methacrylamid |
| ≥ 20,0 und ≤ 40,0 Gew.-% | Acrylnitril und/oder Methacrylnitril, |

wobei sich die eingesetzten Mengen auf 100 Gew.-% aufsummieren, in einpolymerisierter Form aufgebaut ist, eine Glasübergangstemperatur Tg ≥ 20 und ≤ 45 °C aufweist und deren mittlerer Teilchendurchmesser ≥ 100 und ≤ 400 nm beträgt.

Ein weiterer wesentlicher Bestandteil der wässrige Dispersion PG ist eine wässrige Graphen-Dispersion.

Unter Graphen wird technisch eine Monoschicht aus Kohlenstoffatomen verstanden, welche in einer zweidimensionalen Honigwabenstruktur (hexagonale Ringstruktur) vorliegen. Im Rahmen der vorliegenden Erfindung ist der Begriff "Graphen" jedoch nicht ausschließlich auf die aus einer Monoschicht bestehenden Kohlenstoff-Honigwabenstruktur beschränkt, sondern umfasst auch, wie in einer Vielzahl von Publikationen und wie von vielen Graphen-Herstellern für ihr Produkt angegeben, ein Kohlenstoffmaterial, welches aus einer Mischung aus entsprechenden Kohlenstoffmonoschichten, geschichteten Agglomeraten aus zwei übereinander liegenden Kohlenstoffmonoschichten (Zweischichtenprodukt), und geschichteten Agglomeraten aus drei bis zehn und manchmal sogar bis zu zwanzig Kohlenstoffmonoschichten ("few layer graphene") besteht. Das Verhältnis aus separaten Kohlenstoffmonoschichten und Agglomeraten aus zwei- oder mehreren Kohlenstoffmonoschichten ist stark abhängig vom Herstellprozess bzw. dem Anbieter. Im Rahmen der vorliegenden Erfindung ist das "Graphen" genannte Material dadurch charakterisiert, dass es vorzugsweise keinen Graphit-Reflex im Röntgenbeugungsdiagramm aufweist. Das Vorliegen von graphitischen Anteilen wird durch einen Peak bei einem Beugungswinkel 2Theta im Bereich 25 bis 30° (exakter Wert: 26,3°; mit Cu $K\alpha$-Strahlung; Wellenlänge 0,154 nm) charakterisiert. Häufig wird jedoch ein breiter Reflex gemessen, da die Kohlenstoffmonolagen im Graphen unterschiedliche Schichtabstände aufweisen. Das Vorhandensein eines Reflexes in diesem Bereich weist auf eine unvollständige Exfolierung hin und die Intensität dieses Reflexes ermöglicht das Maß der Exfoliation, d.h. das Maß der Aufblätterung bzw. das Maß des Vorliegens an Kohlenstoffmonoschichten zu bestimmen.

"Graphen" im Sinne der vorliegenden Erfindung ist ebenfalls durch eine niedrige Schüttdichte charakterisiert, welche im Bereich ≤ 0,2 $g/cm^3$, beispielsweise im Bereich ≥ 0,001 und ≤ 0,2 $g/cm^3$ oder ≥ 0,003 und ≤ 0,2 $g/cm^3$, vorteilhaft im Bereich ≤ 0,15 $g/cm^3$, beispielsweise im Bereich ≥ 0,001 und ≤ 0,15 $g/cm^3$ oder ≥ 0,003 und ≤ 0,15 $g/cm^3$, besonders vorteilhaft im Bereich ≤ 0,1 $g/cm^3$, beispielsweise im Bereich ≥ 0,001 und ≤ 0,1 $g/cm^3$ oder ≥ 0,003 und ≤ 0,1 $g/cm^3$, mit besonderem Vorteil im Bereich ≤ 0,05 $g/cm^3$, beispielsweise im Bereich ≥ 0,001 und ≤ 0,05 $g/cm^3$ oder ≥ 0,003 und ≤ 0,05 $g/cm^3$, und mit insbesonderem Vorteil im Bereich ≤ 0,01 $g/cm^3$, beispielsweise im Bereich ≥ 0,001 und ≤ 0,01 $g/cm^3$ oder ≥ 0,003 und ≤ 0,01 $g/cm^3$, liegt.

"Graphen" im Sinne der vorliegenden Erfindung ist weiterhin durch eine sehr hohe BET-Oberfläche (Brunauer-Emmett-Teller-Oberfläche) charakterisiert, welche im Bereich ≥ 200 $m^2/g$, beispielsweise im Bereich ≥ 200 und ≤ 2600 $m^2/g$ oder ≥ 200 und ≤ 2000 $m^2/g$ oder ≥ 200 und ≤ 1500 $m^2/g$ oder ≥ 200 und ≤ 700 $m^2/g$ und vorteilhaft im Bereich ≥ 300 $m^2/g$, beispielsweise im Bereich ≥ 300 und ≤ 2600 $m^2/g$ oder ≥ 300 und ≤ 2000 $m^2/g$ oder ≥ 300 und ≤ 1500 $m^2/g$ oder ≥ 300 und ≤ 700 $m^2/g$, liegt.

"Graphen" im Sinne der vorliegenden Erfindung ist vorteilhaft durch ein hohes Verhältnis von Kohlenstoffatomen zu Sauerstoffatomen (C/O-Verhältnis) charakterisiert. Das C/O-Verhältnis spiegelt das Maß der Reduktionsreaktion ausgehend von Graphitoxid, dem gängigen Ausgangsprodukt bei der Herstellung von Graphen wider. Das C/O-Verhältnis beträgt mindestens ≥ 3, bevorzugt ≥ 5, besonders bevorzugt ≥ 50, insbesondere bevorzugt ≥ 100 und mit besonderem Vorteil ≥ 500, jeweils bestimmt aus den atomaren Gehalten (in %) an Kohlenstoff und Sauerstoff mittels Röntgenphotoelektronenspektroskopie (X-ray Photoelectron Spectroskopie).

Erfindungsgemäß einsetzbares Graphen und seine Herstellung ist beispielsweise in Macromolecules 2010, 43, Seiten 6515 bis 6530, in WO 2009/126592, in J. Phys. Chem. B 2006, 110, Seiten 8535 bis 8539, in Chem. Mater. 2007, 19, Seiten 5396 bis 4404, in American Chemical Society Nano 2008, 2 (3), Seiten 463 bis 470, in Nano Letters 2010, 10 (12), Seiten 4863 bis 4868, sowie in der zitierten Literatur beschrieben.

Die erfindungsgemäß eingesetzte Menge an Graphen liegt im Bereich vorn ≥ 0,01 und ≤ 20 Gew.-Teile, vorteilhaft ≥ 0,1 und ≤ 15 Gew.-Teile und insbesondere vorteilhaft ≥ 0,5 und ≤ 10 Gew.-Teile pro 100 Gewichtsteilen Dispersionspolymerisat.

Mit Vorteil erfolgt die Herstellung der wässrigen Dispersion PG dergestalt, dass eine wässrige Polymerisatdispersion mit der entsprechenden Menge einer wässrigen Graphen-Dispersion gemischt wird. Hierzu wird in einem Temperaturbereich ≥ 10 und ≤ 40 °C vorteilhaft die Gesamtmenge der wässrigen Polymerisatdispersion vorgelegt und die wässrige Graphen-Dispersion unter homogener Mischung langsam zudosiert. Dabei wird insbesondere darauf geachtet, dass die Komponenten der wässrigen Polymerisatdispersion (im Wesentlichen Dispersionspolymerisat und Dispergierhilfsmittel, wie Tenside oder Schutzkolloide) mit den Komponenten der wässrigen Graphen-Dispersion (im Wesentlichen Graphen und Dispergierhilfsmittel) miteinander kompatibel sind und keine störenden Reaktionen, wie insbesondere Koagulation, eingehen.

Die Herstellung einer wässrigen Graphen-Dispersion ist dem Fachmann geläufig und erfolgt beispielsweise in situ durch Reduktion von Graphitoxid in einer wässrigen Graphitoxid-Dispersion, wie beispielsweise in Nature Nanotechnology 3, Seiten 101 bis 105 sowie der WO 2010/86176 oder der WO 2011/144321 offenbart. Selbstverständlich ist es auch möglich, pulverförmiges Graphen in einer wässrige Tensid- oder Schutzkolloid-Lösung unter Energieeintrag mittels Ultraschall zu dispergieren. Die so hergestellten und zur Herstellung der wässrigen Dispersionen PG eingesetzten Graphen-Dispersionen weisen in der Regel einen Gehalt an Graphen im Bereich ≥ 0,001 und ≤ 10,0 Gew.-%, vorteilhaft im Bereich ≥ 0,01 und ≤ 5,0 Gew.-% und insbesondere vorteilhaft im Bereich ≥ 0,1 und ≤ 3,0 Gew.-%, jeweils bezogen auf die wässrige Graphen-Dispersion auf.

Demnach umfasst die vorliegende Erfindung in einer Ausführungsform auch die Verwendung einer wässrigen Dispersion PG, hergestellt aus

a) einer wässrigen Polymerisatdispersion, deren Dispersionspolymerisat eine Glasübergangstemperatur Tg aufweist, und

b) einer wässrigen Graphen-Dispersion

wobei der Gewichtsanteil an Graphen ≥ 0,01 und ≤ 20 Gew.-Teile pro 100 Gewichtsteilen Dispersionspolymerisat (fest/fest) beträgt, als Bindemittel für körnige und/oder faserförmige Substrate.

Selbstverständlich kann die wässrige Dispersion PG im Rahmen der vorliegenden Erfindung noch weitere, dem Fachmann in Art und Menge geläufige übliche Hilfsstoffe enthalten, wie beispielsweise Farbstoffe, optische Aufheller, Retentionsmittel, Netzmittel, Entschäumer, Konservierungsmittel, Schleimbekämpfungsmittel, Weichmacher, Antiblockmittel, Antistatika, Hydrophobierungsmittel etc.

Körnige und/oder faserförmige Substrate sind dem Fachmann geläufig. Erfindungsgemäß können prinzipiell alle organischen oder anorganischen natürlichen und/oder synthetischen körnigen und/oder faserförmigen Verbindungen, deren längste Ausdehnung im Falle von körnigen Substraten ≤ 10 mm, bevorzugt ≤ 5 mm und insbesondere ≤ 1 mm und deren größter Durchmesser im Falle von faserförmigen Substraten ≤ 1 mm, bevorzugt ≤ 0,1 mm und insbesondere ≤ 0,05 mm beträgt, eingesetzt werden.

Bei den körnigen Substraten handelt es sich beispielsweise um weiße oder farbige Pigmentverbindungen, wie insbesondere Titandioxid, Zinkoxid, Zinksulfid, Eisen-, Cadmium-, Chrom- oder Bleioxide bzw. -sulfide sowie Bleimolybdate oder Kobaltblau oder um Füllstoffe (Brechungsindexwerte < 1,7), wie beispielsweise die natürlich vorkommenden Füllstoffe Calcit, Kreide, Dolomit, Kaolin, Talk, Glimmer, Diatomeenerde, Baryt oder die synthetisch hergestellten Füllstoffe präzipitiertes Calciumcarbonat oder Bariumsulfat sowie pyrogene Kieselsäure.

Bei den faserförmigen Substraten handelt es sich um Naturfasern, wie pflanzliche, tierische und mineralische Fasern oder um künstlich hergestellte Chemiefasern aus natürlichen oder synthetischen Polymeren. Beispiele für pflanzliche Fasern sind Baumwollfasern, Flachsfasern, Hanffasern, Kenaffasern, Jutefasern, Holzfasern oder Sisalfasern, Beispiele für tierische Fasern sind Wolle oder andere Tierhaare, ein Beispiel für mineralische Fasern ist Steinwolle, ein Beispiel für Chemiefasern natürlichen Ursprungs sind Viskosefasern und Beispiele für Chemiefasern auf Basis synthetischer Polymere sind Polyesterfasern, wie Polytrimethylenterephthalat-, Polyethylennaphthalat-, Polyethylenterephthalat- oder Polybutylenterephthalatfasern sowie die unterschiedlichen Polycarbonatfasern, Polyolefinfasern, wie insbesondere Polyethylen- oder Polypropylenfasern, Polyamidfasern, wie Polycaprolactamfasern (Polyamid 6), Polyamidfasern aus Hexamethylendiamin und Adipinsäure (Polyamid 66), Polyamidfasern aus Hexamethylendiamin und Terephthalsäure (Polyamid 6T), Polyamidfasern aus para-Phenylendiamin und Terephthalsäure (Aramid) sowie Mineralfasern, wie Glasfasern, Carbonfasern oder Basaltfasern.

Selbstverständlich umfasst der Begriff Substrat im Rahmen der vorliegenden Schrift vorteilhaft auch die aus Fasern erhältlichen Faservliese, wie beispielsweise so genannte mechanisch verfestigte, insbesondere genadelte Faservliese oder chemisch vorgebundene Faservliese.

Im Rahmen der vorliegenden Schrift soll unter einem Faservlies eine flächenförmige Faserschicht verstanden werden, bei der Fasern begrenzter Länge, Endlosfasern oder Garne jeglicher Art und jeglichen Ursprungs zu einem Vlies zusammengefügt und auf irgendeine Weise miteinander verbunden worden sind, insbesondere durch mechanische Verfestigung oder chemische Vorbindung.

Mit besonderem Vorteil werden erfindungsgemäß Faservliese eingesetzt, welche aus lignocellulosehaltigen Fasern, wie Baumwollfasern, Flachsfasern, Hanffasern, Kenaffasern, Jutefasern, Holzfasern und/oder Sisalfasern oder Mischungen davon mit thermoplastischen Kunststofffasern, wie Polyester- oder Polyolefinfasern, aufgebaut sind oder Glasfaservliese.

Die erfindungsgemäß einsetzbaren Faservliese weisen in der Regel ein Flächengewicht von ≥ 10 und ≤ 3000 g/$m^2$, vorteilhaft von ≥ 40 und ≤ 2000 g/$m^2$ und besonders vorteilhaft vorn ≥ 50 und ≤ 1400 g/$m^2$ auf.

Verfahrenswesentlich ist, dass die wässrige Dispersion PG gleichmäßig auf die Oberfläche des faserförmigen und/oder körnigen Substrats aufgebracht (bzw. in das Faservlies eingebracht) wird. Dabei wird die Menge an wässriger Dispersion PG so gewählt, dass pro 100 g körnigem und/oder faserförmigem Substrat ≥ 1 g und ≤ 100 g, bevorzugt ≥ 2 g und ≤ 50 g und insbesondere bevorzugt ≥ 5 g und ≤ 30 g Bindemittel (berechnet als Summe der Gesamtmengen von Dispersionspolymerisat und Graphen auf Feststoffbasis) eingesetzt werden. Das Aufbringen der wässrigen Dispersion PG auf das körnige und/oder faserförmige Substrat, insbesondere Faservlies ist dem Fachmann geläufig und erfolgt beispielsweise durch Tränkung oder durch Besprühen des körnigen und/oder faserförmigen Substrats.

Nach dem Aufbringen der wässrigen Dispersion PG auf das körnige und/oder faserförmige Substrat wird das mit der wässrigen Dispersion PG behandelte körnige und/oder faserförmige Substrat gegebenenfalls in Form gebracht und anschließend das so behandelte körnige und/oder faserförmige Substrat bei einer Temperatur T, welche höher ist als die Glasübergangstemperatur Tg des Dispersionspolymeriats (T > Tg), einem Trocknungsschritt unterzogen.

Mit Vorteil erfolgt der Trocknungsschritt bei einer Temperatur T ≥ Tg + 5 °C und mit besonderem Vorteil bei einer Temperatur T ≥ Tg + 20 °C. Zur Erzielung kurzer Trockenzeiten können auch deutlich höhere Temperaturen, wie beispielsweise Tg + 50 °C oder Tg + 100 °C oder sogar Tg + 150 °C herangezogen werden. Dabei erfolgt der Trocknungsschritt in der Regel bis zur Gewichtskonstanz des Formkörpers.

In einer Ausführungsform sollen auch die nach dem erfindungsgemäßen Verfahren zugänglichen Formkörper umfasst sein.

Die nach dem erfindungsgemäßen Verfahren erhältlichen Formkörper eignen sich insbesondere vorteilhaft als Bauelement im Fahrzeugbau, wie beispielsweise als Türinsert, Türdekorträger, Kniefänger, Handschuhfach, Kofferraumverkleidung oder Sitzrückenverkleidung, in Bauwerken, wie beispielsweise als Raumteiler, Trennwand oder Deckenplatte und Möbeln wie beispielsweise als Sitz- oder Rückenfläche.

Die nach dem erfindungsgemäßen Verfahren hergestellten Formkörper, wie insbesondere verfestigte Faservliese weisen vorteilhaft eine elektrische Leitfähigkeit auf, weswegen sich bei ihrer Herstellung bzw. ihrer Weiterverarbeitung, beispielsweise bei der Herstellung von bitumierten Dachbahnen, eine störende elektrostatische Aufladung vermeiden lässt.

Die Erfindung soll anhand nachfolgender nicht einschränkender Beispiele erläutert werden.

Beispiele

Als wässrige Polymerisatdispersion wurde eine 51 gew.-%ige wässrige Polymerisatdispersion eingesetzt, deren Polymerisat in einpolymerisierter Form aus 18 Gew.-% n-Butylacrylat, 50 Gew.-% Ethylacrylat, 25 Gew.-% Acrylnitril, 4 Gew.-% Acrylamid und 3 Gew.-% N-Methylolacrylamid aufgebaut war und eine Glasübergangstemperatur von 30 °C (midpoint temperature nach ASTM D 3418-12, ermittelt durch Differentialthermoanalyse; Aufheizrate 20 K/min) aufwies und deren mittlere Teilchengröße 310 nm (bestimmt nach ISO-Norm 13 321; cumulant z-average) betrug.

Zur Herstellung der graphenhaltigen wässrigen Polymerisatdispersion wurden bei Raumtemperatur (20 bis 25 °C) 24,525 Gewichtsteile entionisiertes Wasser, 0,225 Gewichtsteile Tamol® NN 9401 (Verkaufsprodukt der BASF SE) und 0,168 Gewichtsteile Graphen in einem Mischbehälter vorgelegt und das Graphen mittels 10 minütiger Ultraschalleinstrahlung (Ultraschallfinger (UP 400 S H 7) unter Kühlung dispergiert. Daran anschließend wurden 5,082 Gewichtsteile der vorgenannten wässrigen Polymerisatdispersion zugegeben und die erhaltene Mischung homogen gemischt. Durch Verdünnen mit entionisiertem Wasser wurde die erhaltene Mischung auf einen Gesamtfeststoffgehalt von 3,7 Gew.-% eingestellt. Die erhaltene Mischung wird im Folgenden Bindemittelflotte B1 bezeichnet.

Auch die vorgenannte wässrige Polymerisatdispersion selbst wurde mit entionisiertem Wasser auf einen Feststoffgehalt von 3,7 Gew.-% verdünnt. Die erhaltene verdünnte wässrige Polymerisatdispersion wird im Folgenden als Bindemittelflotte V bezeichnet.

Anwendungstechnische Prüfung

Zur Herstellung der gebundenen Faservliese wurde als Rohvlies ein Glasfaservlies (28,5 cm Länge, 27 cm Breite) mit einem Flächengewicht von 53 g/$m^2$ der Fa. Whatman International Ltd, Springfield Mill, James Whatman Way, Maidstone, Kent ME14 2LE England verwendet.

Zum Aufbringen der wässrigen Bindemittelflotten (Imprägnierung) wurden die Glasfaservliese in Längsrichtung über ein Endlos-PES-Siebband mit einer Bandlaufgeschwindigkeit von 2,0 m pro Minute jeweils durch die vorgenannten

3,7 gew.-%igen wässrigen Bindemittelflotten B1 und V geleitet. Durch anschließende Absaugung der wässrigen Bindemittelflotten wurde der Nassauftrag auf 286 g/m$^2$ (entsprechend 10,6) g/m$^2$ Bindemittel als Feststoff gerechnet) eingestellt. Die so erhaltenen imprägnierten Glasfaservliese wurden in einem Mathis-Ofen auf einen Kunststoffnetz als Träger für 3 Minuten bei 180 °C bei maximalem Heißluftstrom getrocknet und ausgehärtet. Nach dem Abkühlen auf Raumtemperatur wurden Prüfstreifen mit einer Größe von 240 x 50 mm in Faserlängsrichtung ausgestanzt. Die erhaltenen Prüfstreifen wurden anschließend für 24 Stunden bei 23 °C und 50 % relativer Luftfeuchtigkeit (Normklima) im Klimaraum gelagert. Die in Abhängigkeit von den eingesetzten Bindemittelflotten B1 und V erhaltenen Glasfaservliesprüfstreifen werden im Folgenden Prüfstreifen B1 und V bezeichnet.

Bestimmung der Reißkraft

Die Bestimmung der Reißkraft erfolgte bei Raumtemperatur an einer Zugprüfmaschine der Firma Zwick-Roell, Typ Z005. Die Prüfstreifen B1 und V wurden dabei so senkrecht in eine Spannvorrichtung eingebracht, dass die freie Einspannlänge 200 mm betrug. Daran anschließend wurden die eingespannten Prüfstreifen mit einer Geschwindigkeit von 10 mm pro Minute in entgegengesetzter Richtung bis zum Riss der Prüfstreifen auseinander gezogen. Die Angabe der Reißkraft erfolgt unter Normierung auf 64 g/m$^2$ in Newton pro 50 mm. Je höher die zum Riss der Prüfstreifen erforderliche Kraft ist, desto besser ist die entsprechende Reißkraft zu bewerten. Es erfolgten jeweils 5 Messungen. Die in Tabelle 1 angegebenen Werte stellen jeweils den Mittelwert dieser Messungen dar.

Bestimmung Nassreißkraft

Zur Bestimmung der Nassreißkraft wurden die Prüfstreifen für 15 Minuten bei 80 °C in entionisiertem Wasser gelagert und danach überschüssiges Wasser mit einem Baumwollgewebe abgetupft. Die Bestimmung der Nassreißkraft erfolgte an einer Zugprüfmaschine der Firma Zwick-Roell, Typ Z005. Die Prüfstreifen B1 und V wurden dabei so senkrecht in eine Spannvorrichtung eingebracht, dass die freie Einspannlänge 200 mm betrug. Daran anschließend wurden die eingespannten Prüfstreifen mit einer Geschwindigkeit von 10 mm pro Minute in entgegengesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 separate Messungen. Die in Tabelle 1 angegebenen Werte stellen jeweils den Mittelwert dieser Messungen dar.

Bestimmung Heißreißkraft

Die Bestimmung der Heißreißkraft erfolgte an einer Zugprüfmaschine der Firma Zwick-Roell, Typ Z010 deren Spannvorrichtung sich in einer beheizbaren Kammer befand. Die Prüfstreifen B1 und V wurden in der auf 180 °C vorgeheizten Kammer so senkrecht in eine Spannvorrichtung eingebracht, dass die freie Einspannlänge 100 mm betrug. Nach 1 Minute Wartezeit bei 180 °C wurden die eingespannten Prüfstreifen mit einer Geschwindigkeit von 25 mm pro Minute in entgegengesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 separate Messungen. Die in Tabelle 1 angegebenen Werte stellen jeweils den Mittelwert dieser Messungen dar.

Tabelle 1: Reißkraft, Nassreißkraft und Heißreißkraft

| Prüfstreifen | V | B1 |
|---|---|---|
| | [Angaben in N/5cm, gewichtskor rigiert auf 64g/m$^2$] | |
| Reißkraft | 62,0 | 62,2 |
| Nassreißkraft | 9,6 | 10,7 |
| Heißreißkraft | 21,6 | 32,4 |

Bestimmung Biegesteifigkeit

Aus den vorgenannten, mit den Bindemittelflotten B1 und V gebundenen abgekühlten Glasfaservliesen wurden jeweils 10 Prüfstreifen von 70 x 30 mm längs und quer zur Laufrichtung des Vlieses ausgestanzt. Anschließend wurden die erhaltenen Prüfstreifen für 24 Stunden bei Normklima gelagert.

Die Bestimmung der Biegefestigkeit erfolgte mit einer Prüfmaschine der Firma Zwick-Roell, Typ Z 2,5. Hierzu wurden die vorgenannten Prüfstreifen in den Probenhalter eingespannt und bei einer Messlänge von 10 mm über die Kante des Kraftnehmers mit einer Geschwindigkeit von 6° pro Sekunde bis zu einer Verformung von 30° gebogen und

dabei die maximal aufzuwendende Kraft (in mN) bestimmt. Die Prüfung wurde jeweils an 5 Prüfkörpern in Längs- und in Querrichtung durchgeführt. Dabei ist die Biegesteifigkeit umso besser zu bewerten, je höher die aufzuwendende maximale Kraft ist. Die in Tabelle 2 angegebenen Werte stellen den Mittelwert aus den jeweiligen 5 Einzelmessungen dar.

Tabelle 2: Biegesteiffestigkeiten in Längs- und Querrichtung

| | V | B1 |
|---|---|---|
| Prüfstreifen | [Angaben in mN] | |
| Biegesteiffestigkeit | | |
| in Längsrichtung | 107 | 114 |
| in Querrichtung | 86 | 93 |

Elektrische Eigenschaften des graphenhaltigen Glasfaservlieses

An einem mit der Bindemittelflotte B1 imprägnierten, getrockneten und gehärteten 28,5 x 27 cm-Glasfaservlies wurde der Schichtwiderstand mittels eines Loresta GP-Gerätes der Firma Mitsubishi und einer ESP-Sonde bestimmt.

Hierzu wurde an fünf verschiedenen Stellen (Mitte, sowie Mitte oben, Mitte unten, Mitte rechts und Mitte links, jeweils 2 cm vom Rand) des imprägnierten 28,5 x 27 cm-Glasfaservlieses der Schichtwiderstand und die entsprechenden Schichtdicken bestimmt und daraus der gemittelte Schichtwiderstand und der Mittelwert der spezifischen Leitfähigkeit bestimmt. Dabei wurde als gemittelter Schichtwiderstand ein Wert von $6{,}8 \times 10^4$ Ohm und als Mittelwert der spezifischen Leitfähigkeit ein Wert von $1{,}1 \times 10^{-3}$ S/cm ermittelt.

**Patentansprüche**

1. Verfahren zur Herstellung eines Formkörpers aus körnigen und/oder faserförmigen Substraten, **dadurch gekennzeichnet, dass** eine wässrige Dispersion PG, hergestellt aus

    a) einer wässrigen Polymerisatdispersion, deren Dispersionspolymerisat eine Glasübergangstemperatur Tg aufweist, und
    b) einer wässrigen Graphen-Dispersion,

    wobei der Gewichtsanteil an Graphen ≥ 0,01 und ≤ 20 Gew.-Teile pro 100 Gewichtsteilen Dispersionspolymerisat (fest/fest) beträgt, auf das körnige und/oder faserförmige Substrat aufgebracht wird, gegebenenfalls das mit der wässrigen Dispersion PG behandelte körnige und/oder faserförmige Substrat in Form gebracht wird und anschließend das so behandelte körnige und/oder faserförmige Substrat bei einer Temperatur T > Tg einem Trocknungsschritt unterzogen wird.

2. Verfahren nach Anspruch 1, **dadurch gekennzeichnet, dass** der Gewichtsanteil an Graphen ≥ 0,5 und ≤ 10 Gew.-Teile pro 100 Gewichtsteilen Dispersionspolymerisat beträgt.

3. Verfahren nach einem der Ansprüche 1 oder 2, **dadurch gekennzeichnet, dass** das Dispersionspolymerisat eine Glasübergangstemperatur im Bereich ≥ 15 und ≤ 60 °C aufweist.

4. Verfahren nach einem der Ansprüche 1 bis 3, **dadurch gekennzeichnet, dass** pro 100 g körniges und/oder faserförmiges Substrat ≥ 1 und ≤ 100 g Bindemittel (berechnet als Summe der Gesamtmengen an Dispersionspolymerisat und Graphen auf Feststoffbasis) eingesetzt werden.

5. Verfahren nach einem der Ansprüche 1 bis 4, **dadurch gekennzeichnet, dass** die Trocknungstemperatur T ≥ Tg + 5 °C beträgt.

6. Verfahren nach einem der Ansprüche 1 bis 5, **dadurch gekennzeichnet, dass** als Substrat ein Faservlies eingesetzt wird.

7. Formkörper, erhältlich nach einem Verfahren gemäß einem der Ansprüche 1 bis 6.

8. Verwendung einer wässrigen Dispersion PG, hergestellt aus

a) einer wässrigen Polymerisatdispersion, deren Dispersionspolymerisat eine Glasübergangstemperatur Tg aufweist, und
b) einer wässrigen Graphen-Dispersion,

wobei der Gewichtsanteil an Graphen ≥ 0,01 und ≤ 20 Gew.-Teile pro 100 Gewichtsteilen Dispersionspolymerisat (fest/fest) beträgt, als Bindemittel für körnige und/oder faserförmige Substrate.

**Claims**

1. A process for producing a shaped article from granular and/or fibrous substrates, which comprises applying an aqueous dispersion PG, prepared from

    a) an aqueous polymer dispersion whose dispersion polymer has a glass transition temperature Tg, and
    b) an aqueous graphene dispersion,

    wherein the weight fraction of graphene is ≥ 0.01 and ≤ 20 parts by weight per 100 parts by weight of dispersion polymer (solids/solids), to the granular and/or fibrous substrate, optionally shaping the granular and/or fibrous substrate treated with the aqueous dispersion PG and then subjecting the granular and/or fibrous substrate thus treated to a drying step at a temperature T > Tg.

2. The process according to claim 1 wherein the weight fraction of graphene is ≥ 0.5 and ≤ 10 parts by weight per 100 parts by weight of dispersion polymer.

3. The process according to either of claims 1 and 2 wherein the dispersion polymer has a glass transition temperature in the range ≥ 15 and ≤ 60°C.

4. The process according to any of claims 1 to 3 wherein ≥ 1 g and ≤ 100 g of binder (reckoned as summed total amounts of dispersion polymer and graphene solids) are used per 100 g of granular and/or fibrous substrate.

5. The process according to any of claims 1 to 4 wherein the drying temperature T is ≥ Tg + 5°C.

6. The process according to any of claims 1 to 5 wherein the substrate used is a fiber web.

7. A shaped article obtainable by a process according to any of claims 1 to 6.

8. A method of using an aqueous dispersion PG, prepared from

    a) an aqueous polymer dispersion whose dispersion polymer has a glass transition temperature Tg, and
    b) an aqueous graphene dispersion,

    wherein the weight fraction of graphene its ≥ 0.01 and ≤ 20 parts by weight per 100 parts by weight of dispersion polymer (solids/solids), as binder for granular and/or fibrous substrates.

**Revendications**

1. Procédé de fabrication d'un corps moulé à partir de substrats particulaires et/ou fibreux, **caractérisé en ce qu'**une dispersion aqueuse PG, fabriquée à partir de

    a) une dispersion aqueuse de polymère, dont le polymère en dispersion présente une température de transition vitreuse Tg, et
    b) une dispersion aqueuse de graphène,

    la proportion en poids de graphène étant ≥ 0,01 et ≤ 20 parties en poids pour 100 parties en poids de polymère en dispersion (solide/solide), est appliquée sur le substrat particulaire et/ou fibreux, le substrat particulaire et/ou fibreux traité avec la dispersion aqueuse PG est éventuellement façonné, puis le substrat particulaire et/ou fibreux ainsi traité est soumis à une étape de séchage à une température T > Tg.

**2.** Procédé selon la revendication 1, **caractérisé en ce que** la proportion en poids de graphène est ≥ 0,5 et ≤ 10 parties en poids pour 100 parties en poids de polymère en dispersion.

**3.** Procédé selon l'une quelconque des revendications 1 ou 2, **caractérisé en ce que** le polymère en dispersion présente une température de transition vitreuse dans la plage ≥ 15 et ≤ 60 °C.

**4.** Procédé selon l'une quelconque des revendications 1 à 3, **caractérisé en ce que** 1 et ≤ 100 g de liant (calculé en tant que somme des quantités totales de polymère en dispersion et de graphène en termes de solides) est utilisé pour 100 g de substrat particulaire et/ou fibreux.

**5.** Procédé selon l'une quelconque des revendications 1 à 4, **caractérisé en ce que** la température de séchage T est ≥ Tg +5 °C.

**6.** Procédé selon l'une quelconque des revendications 1 à 5, **caractérisé en ce qu'**un non-tissé fibreux est utilisé en tant que substrat.

**7.** Corps moulé, pouvant être obtenu par un procédé selon l'une quelconque des revendications 1 à 6.

**8.** Utilisation d'une dispersion aqueuse PG, fabriquée à partir de

a) une dispersion aqueuse de polymère, dont le polymère en dispersion présente une température de transition vitreuse Tg, et
b) une dispersion aqueuse de graphène,

la proportion en poids de graphène étant ≥ 0,01 et ≤ 20 parties en poids pour 100 parties en poids de polymère en dispersion (solide/solide), en tant que liant pour des substrats particulaires et/ou fibreux.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4076917 A
- EP 445578 A
- EP 583086 A
- EP 651088 A
- EP 672920 A
- DE 2214450 A
- US 5143582 A
- US 200482689 A
- WO 9909100 A
- WO 1034645 A
- EP 1005508 A
- EP 1240205 A
- EP 1448733 A
- EP 2328972 A
- WO 201129810 A
- WO 2012117017 A
- WO 201086176 A
- WO 2011144321 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- EP 40419 B
- EP 567812 A
- EP 614922 A
- DE 4213965 A
- US 3360599 A
- US 3238173 A
- US 3726824 A
- US 3734686 A
- US 6207756 A
- WO 2009126592 A


### In der Beschreibung aufgeführte Nicht-Patentliteratur


- **HIERZU.** Emulsionspolymerisation in Encyclopedia of Polymer Science and Engineering. 1987, vol. 8, 659
- **D.C. BLACKLEY.** *High Polymer Latices,* 1966, vol. 1, 35
- **H. WARSON.** The Applications of Synthetic Resin Emulsions. 1972, 246
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **J. BRANDRUP ; E.H. IMMERGUT.** Polymerhandbook. John Weley & Sons, 1989, 133-141
- Encyclopedia of Polymer Science and Technology. John Wiley & Sons Inc, 1966, vol. 5, 847
- Ullmann's Encyclopedia of Industrial Chemistry. Verlag Chemie, 1992, 169
- **ZOSEL.** *Farbe und Lack,* 1976, vol. 82, 125-134
- **T.G. FOX.** *Bull. Am. Phys. Soc.,* 1956
- Ullmann's Encyclopädie der technischen Chemie. Verlag Chemie, 1980, vol. 19, 18
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Ullmann's Cncyclopedia of Industrial Chemistry. Verlag Chemie, 1992, 169
- **ECKERSLEY et al.** *Am. Chem. Soc., Div. Polymer Chemistry,* 1977, vol. 38 (2), 630, , 631
- *Macromolecules,* 2010, vol. 43, 6515-6530
- *J. Phys. Chem. B,* 2006, vol. 110, 8535-8539
- *Chem. Mater.,* 2007, vol. 19, 5396-4404
- *American Chemical Society Nano,* 2008, vol. 2 (3), 463-470
- *Nano Letters,* 2010, vol. 10 (12), 4863-4863
- *Nature Nanotechnology,* vol. 3, 101-105